# EUROPÄISCHE PATENTSCHRIFT

(11) **EP 0 354 381 B1**
(45) Veröffentlichungstag und Bekanntmachung des Hinweises auf die Patenterteilung: **29.12.1993**
(21) Anmeldenummer: 89112968.6
(22) Anmeldetag: 14.07.1989
(51) Int. Cl.: F16F 13/00, B60K 5/12

(54) **Hydraulisch gedämpftes Motorlager**
Engine mounting with hydraulic damping
Support de moteur à amortissement hydraulique

(30) Priorität: 11.08.1988 DE 3827326
(43) Veröffentlichungstag der Anmeldung: 14.02.1990
(73) Patentinhaber: METZELER GIMETALL AG, D-80992 München (DE)
(72) Erfinder: Bitschkus, Horst, D-5416 Hilgert (DE); Hofmann, Manfred, D-6257 Hünfelden 1 (DE)
(74) Vertreter: Seibert, Hannelore

(56) Entgegenhaltungen:
- EP-A- 0 156 697
- EP-A- 0 164 081
- EP-A- 0 183 267
- EP-A- 0 265 681
- EP-A- 0 278 054
- DE-A- 3 632 612
- DE-A- 3 827 124
- FR-A- 2 599 452
- PATENT ABSTRACTS OF JAPAN, Band 10, Nr. 10 (M-446)[2067], 16. Januar 1986;& JP-A-60 172 744 (NISSAN JIDOSHA K.K.)

## Beschreibung

Die Erfindung bezieht sich auf ein hydraulisch gedämpftes Motorlager mit zwei mit einer Flüssigkeit gefüllten und zumindest teilweise von gummielastischen Umfangswänden umgebenen Kammern, die durch eine am Außenumfang abdichtend in das Lagergehäuse eingesetzte Zwischenplatte voneiander getrennt sind und über einen, in deren Umfangsbereich angeordneten Überströmkanal hydraulisch miteinander in Verbindung stehen, wobei die Zwischenplatte aus zwei tassenförmigen Blechteilen besteht, die jeweils eine Bodenfläche, einen zylindrischen Abschnitt sowie einen daran anschließenden, nach außen gewölbten Rand aufweisen.

Ein derartiges Motorlager ist aus der EP-A-0 265 681 bekannt. Dabei ist zwischen zwei Metallplatten eine als Membran wirkende Gummiplatte eingespannt, deren äußerer Umfang die Innenwandung des Überströmkanals von der Arbeitskammer zur Ausgleichskammer begrenzt.

Hierbei sind jedoch besondere Anforderungen an die Ausbildung der Gummimembran gestellt, um eine eindeutige Kanalbegrenzung zu bewirken. Darüberhinaus ist durch die Einspannung über die beiden Platten nur ein geringer Wirkungsgrad dieser Membran gegeben.

Aus der JP-A-60-172744 ist ein hydraulisch dämpfendes Motorlager bekannt, bei dem eine Zwischenplatte mit zwei übereinanderliegenden Kanalräumen vorgesehen ist, die jeweils durch spiralförmige Einbauten und einer zentralen Übergangsöffnung die Gestaltung eines langen Kanals gewährleisten.

Der vorliegenden Erfindung liegt demgegenüber die Aufgabe zugrunde, ein derartiges hydraulisch gedämpftes Motorlager mit einem mehrwendeligen Kanal zu schaffen, bei dem die den Kanal aufnehmende Zwischenplatte sehr einfach aufgebaut ist und bei der mit einfachen Mitteln die Kanallänge und die Strömungsführung eingestellt und beeinflußt werden können.

Zur Lösung dieser Aufgabe ist erfindungsgemäß vorgesehen,
- daß die Bodenflächen der tassenförmigen Blechteile mit ihrer Unterseite gegen eine dazwischenliegende ebene Platte gleichen Außendurchmessers wie die Blechteile anliegen, so daß zu beiden Seiten der Platte ringförmige Teilkanäle gebildet werden, die jeweils durch den nach außen gewölbten Rand und den zylindrischen Abschnitt des jeweiligen Blechteils, den Randbereich der ebenen Platte und die Abdichtung am zylindrischen Lagergehäuse begrenzt sind,
- daß die tassenförmigen Blechteile im zylindrischen Abschnitt je eine radial nach innen gerichtete Öffnung und die ebene Platte im Randbereich außerhalb der Bodenflächen eine axiale Durchtrittsöffnung aufweisen, und
- daß im oberen und unteren Teilkanal jeweils ein Umfangsbereich zwischen radialer und axialer Öffnung abgeschottet ist.

Nach diesem Konstruktionsprinzip besteht die Zwischenplatte lediglich aus drei gestanzten bzw. gepreßten Blechteilen, die starr miteinander verbunden werden und eine eindeutige Begrenzung und Führung des doppelwendeligen Kanals bilden. Durch entsprechendes Verdrehen der Blechteile gegeneinander vor dem Zusammenbau und die entsprechende Anordnung der Abschottungen lassen sich damit beliebige Kanallängen von etwa bis zu 700° erreichen.

Besonders zweckmäßig für den Erhalt eines langen Kanals ist es, wenn die radial nach innen gerichteten Öffnungen über den Umfang gegeneinander versetzt angeordnet sind und die axiale Durchtrittsöffnung im Umfangsbereich zwischen den beiden radialen Öffnungen liegt und der jeweils kürzere Umfangsbereich zwischen der jeweiligen radialen Öffnung und der axialen Durchtrittsöffnung abgeschottet ist.

Eine solche Zwischenplatte kann vorteilhafterweise noch eine zentrale Öffnung aufweisen, in die eine gummielastische Entkopplungsmembran eingespannt ist.

Dabei kann die ebene Platte der Zwischenplatte kreisringförmig ausgebildet und am Innenumfang vom Außenrand der Membran umfaßt sein.

Für eine optimale Beweglichkeit mit definiertem Anschlag für die Membran ist es ferner zweckmäßig, wenn die zentralen Öffnungen im Bodenbereich der tassenförmigen Blechteile gitterförmig ausgebildet und mit axialem Abstand zur Membran aufgewölbt sind.

Eine besonders vorteilhafte Lagergestaltung ergibt sich, wenn die die obere Lagerkammer stirnseitig abschließende Lagerplatte zweiteilig ausgebildet ist derart, daß auf der Oberseite eines an die gummielastische Kammerwandung anvulkanisierten Lagerringes unter Zwischenschaltung einer Gummischicht eine Halterungsplatte aufvulkanisiert ist, die einen zentralen, frei nach innen in die Lagerkammer ragenden Ansatz aufweist, der an seiner innenliegenden Stirnseite einen tellerförmigen Zug- und Druckanschlag aufweist, dessen äußerer Rand bei Druckbelastungen gegen den äußeren Bereich der Zwischenplatten-Oberseite schlägt.

Anhand einer schematischen Zeichnung sind Aufbau und Wirkungsweise eines Ausführungsbeispiels nach der Erfindung näher erläutert. Dabei zeigen:
- Fig. 1: einen Längsschnitt durch ein Motorlager,
- Fig. 2: einen Querschnitt entsprechend der Schnittlinie II - II nach Fig. 1 und
- Fig. 3: einen Schnitt entlang des Kanals entsprechend der Schnittlinie III - III nach Fig. 2 und Seitenansicht auf die Zwischenplatte.

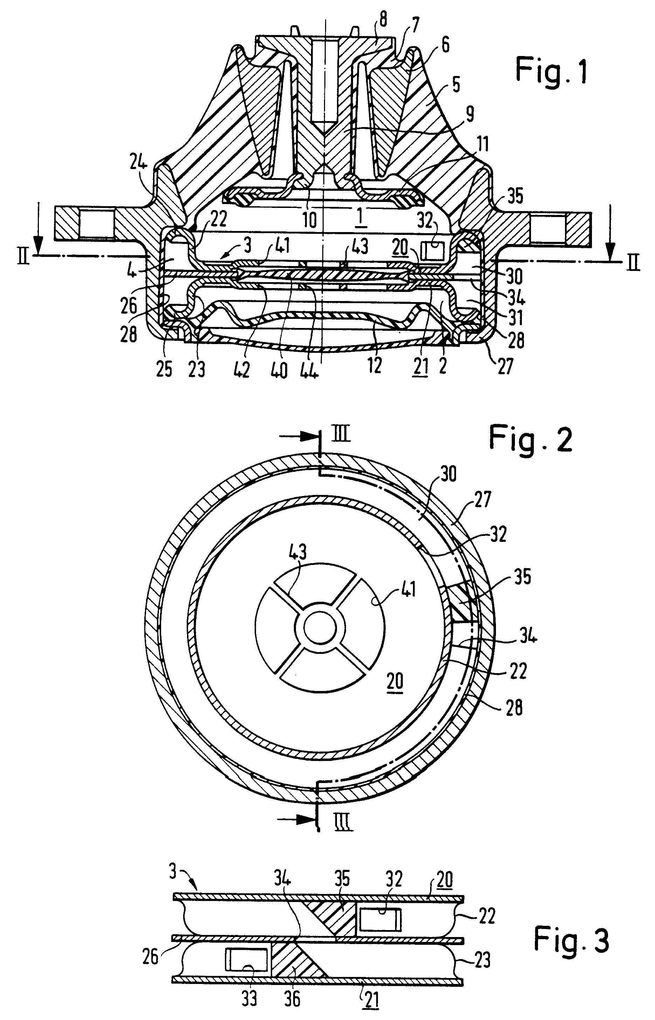

Wie man aus Fig. 1 ersieht, besteht das Motorlager im wesentlichen aus einer oberen Kammer 1 und einer unteren Kammer 2, die durch eine noch zu beschreibende Zwischenplatte 3 mit dem Überströmkanal 4 voneinander getrennt sind. Die obere Kammer 1 wird dabei von einer starkwandigen, hohlkegelförmigen Kammerwandung 5 aus gummielastischem Material gebildet, die im wesentlichen als Tragfeder wirkt. An der Oberseite ist an die Kammerwandung 5 zunächst ein Lagerring 6 anvulkanisiert, auf den unter Zwischenschaltung einer Gummischicht 7 eine Halterungsplatte 8 aufvulkanisiert ist, auf der der abzustützende Motor gelagert werden kann. Diese Ausbildung der Lagerplatte ermöglicht durch die Zwischenschaltung der Gummischicht 7 eine von der Axialsteifigkeit unabhängig einstellbare Radialsteifigkeit des Lagers.

Von der Halterungsplatte 8 ragt dann ein zentraler Ansatz 9 in die Arbeitskammer 1, wobei an der innenliegenden Stirnseite 10 des Ansatzes 9 ein tellerförmiger Zug- und Druckanschlag 11 befestigt ist.

Die untere, als Ausgleichskammer wirkende Lagerkammer 2 wird von einer beispielsweise tassenförmigen Kammerwandung 12 aus ebenfalls gummielastischem Material gebildet.

Die eigentliche Zwischenplatte 3 besteht, wie man insbesondere aus Fig. 1 und 3 ersieht, aus zwei tassenförmigen, gepreßten Blechteilen 20 und 21, deren zylindrische Ansätze 22 und 23 am freien Ende in einen nach außen gewölbten Rand 24 und 25 übergehen. Zwischen diesen beiden Blechteilen 20 und 21 ist eine ebene Platte 26 angeordnet, die den gleichen Außendurchmesser wie die Blechteile 20 und 21 bzw. der nach außen gewölbte Rand 24 und 25 aufweist.

Diese drei Blechteile 20, 21 und 26 werden miteinander vernietet und dann abdichtend in das zylindrische Lagergehäuse 27 eingesetzt, wobei dieses Lagergehäuse 27 auf seiner Innenseite noch eine Gummiauskleidung 28 aufweist, die eine gute Abdichtung gegen die Außenkanten der Blechteile 20 und 21 und der Platte 26 gewährleistet.

Damit sind also zwei übereinanderliegende Teilkanäle 30 und 31 gebildet, die in folgender Weise beaufschlagt und durchströmt werden:

Wie man dazu insbesondere aus dem Querschnitt nach Fig. 2 und dem Schnitt und der Seitenansicht auf die Zwischenplatte nach Fig. 3 ersieht, ist in den zylindrischen Teil 22 des Blechteils 20 eine radial nach innen gerichtete Öffnung 32 eingeschnitten, die sich damit in die Arbeitskammer 1 öffnet. In dem zylindrischen Abschnitt 23 des unteren Blechteils 21 ist eine entsprechende Öffnung 33 vorgesehen, die eine Verbindung zur Ausgleichskammer 2 herstellt. Die ebene Platte 26 weist ferner in dem an den Außenumfang angrenzenden Bereich eine axiale Durchtrittsöffnung 34 auf.

Wie man insbesondere aus Fig. 3 ersieht, sind die radialen Öffnungen 32 und 33 auf dem Umfang so gegeneinander versetzt, daß die axiale Durchtrittsöffnung 34 im Umfangsbereich zwischen ihnen liegt. Dabei sind dann noch im oberen Kanalbereich der Umfangsbereich zwischen der radialen Öffnung 32 und der Durchtrittsöffnung 34 durch eine Gummieinlage 35 oder ein entsprechendes Kunststoffmaterial abgesperrt, wie das in gleicher Weise im unteren Kanalbereich zwischen der Öffnung 33 und der Durchtrittsöffnung 34 mit dem Einsatz 36 erfolgt.

Bei in die Halterungsplatte 8 eingeleiteten vertikalen Schwingungen niedriger Frequenz und großer Amplitude erfolgt nun eine Flüssigkeitsbewegung über die Eintrittsöffnung 32, den Kanal 30, die Durchtrittsöffnung 34, anschließend im gleichen Drehsinn durch den Kanal 31 und schließlich die Austrittsöffnung 33 in die Ausgleichskammer 2.

Durch entsprechende Wahl des Winkels zwischen den radialen Öffnungen 32 und 33 sowie die Anordnung der Einsatzstücke 35 und 36 lassen sich damit Kanallängen in weiten Umfangsbereichen einstellen.

Zusätzlich kann in der Zwischenplatte 3 noch eine Entkopplungsmembran 40 eingespannt sein. Dazu weisen die beiden Blechteile 20 und 21 je eine zentrale Öffnung 41 und 42 auf, die zur Wegbegrenzung für die Membran mit einem Gitter 43 bzw. 44 teilweise geschlossen sein können. Die ebene Platte 26 ist dabei zweckmäßigerweise kreisringförmig ausgebildet, wobei ihr Innenumfang vom Außenumfang der Membran 40 umfaßt wird und durch Zusammenpressen der beiden Blechteile 20 und 21 fest arretiert ist.

Insgesamt ergibt sich also ein hydraulisch gedämpftes Motorlager mit einem Überströmkanal, dessen Länge größer als 360° sein kann und der sehr einfach hergestellt und zusammengesetzt werden kann.

## Patentansprüche

1. Hydraulisch gedämpftes Motorlager mit zwei mit einer Flüssigkeit gefüllten und zumindest teilweise von gummielastischen Umfangswänden (5, 12) umgebenen Kammern (1, 2), die durch eine am Außenumfang abdichtend in das Lagergehäuse (27) eingesetzte Zwischenplatte (3) voneinander getrennt und über einen, in deren Umfangsbereich angeordneten Überströmkanal (4) hydraulisch miteinander in Verbindung stehen, wobei die Zwischenplatte (3) aus zwei tassenförmigen Blechteilen (20, 21) besteht, die jeweils eine Bodenfläche, einen zylindrischen Abschnitt (22, 23) sowie einen daran anschließenden, nach außen gewölbten Rand (24, 25) aufweisen, dadurch gekennzeichnet,
- daß die Bodenflächen der tassenförmigen Blechteile (20, 21) mit ihrer Unterseite gegen eine dazwischenliegende ebene Platte (26) gleichen Außendurchmessers wie die Blechteile (20, 21) anliegen, so daß zu beiden Seiten der Platte (26) ringförmige Teilkanäle (30, 31) gebildet werden, die jeweils durch den nach außen gewölbten Rand (24, 25) und den zylindrischen Abschnitt (22, 23) des jeweiligen Blechteils (20, 21), den Randbereich der ebenen Platte (26) und die Abdichtung am zylindrischen Lagergehäuse (27) begrenzt sind,
- daß die tassenförmigen Blechteile (20, 21) im zylindrischen Abschnitt (22, 23) je eine radial nach innen gerichtete Öffnung (32, 33) und die ebene Platte (26) im Randbereich außerhalb der Bodenflächen eine axiale Durchtrittsöffnung (34) aufweisen, und
- daß im oberen und unteren Teilkanal (30, 31) jeweils ein Umfangsbereich zwischen radialer und axialer Öffnung (32, 32; 34) abgeschottet ist.

2. Motorlager nach Anspruch 1, dadurch gekennzeichnet, daß die radial nach innen gerichteten Öffnungen (32, 33) über den Umfang gegeneinander versetzt angeordnet sind, daß die axiale Durchtrittsöffnung (34) im Umfangsbereich zwischen den beiden radialen Öffnungen liegt und daß der jeweils kürzere Umfangsbereich zwischen der jeweiligen radialen Öffnung (32, 33) und der axialen Durchtrittsöffnung (34) mit Einsätzen (35, 36) abgeschottet ist.

3. Motorlager nach Anspruch 1 oder 2, dadurch gekennzeichnet, daß die Zwischenplatte (3) eine zentrale Öffnung (41, 42) aufweist, in die eine gummielastische Entkopplungsmembran (40) eingespannt ist.

4. Motorlager nach Anspruch 3, dadurch gekennzeichnet, daß die ebene Platte (26) kreisringförmig ausgebildet und am Innenumfang vom Außenrand der Membran (40) umfaßt ist.

5. Motorlager nach Anspruch 3, dadurch gekennzeichnet, daß die zentralen Öffnungen (41, 42) im Bodenbereich der tassenförmigen Blechteile (20, 21) gitterförmig (43, 44) ausgebildet und mit axialem Abstand zur Membran (40) aufgewölbt sind.

6. Motorlager nach einem oder mehreren der Ansprüche 1 bis 5, dadurch gekennzeichnet, daß eine die obere Lagerkammer (1) stirnseitig abschließende Lagerplatte (6, 8) zweiteilig ausgebildet ist derart, daß auf die Oberseite eines an die gummielastische Kammerwandung (5) anvulkanisierten Lagerringes (6) unter Zwischenschaltung einer Gummischicht (7) eine Halterungsplatte (8) aufvulkanisiert ist, die einen zentralen, frei nach innen in die Lagerkammer (1) ragenden Ansatz (9) aufweist, der an seiner innenliegenden Stirnseite (10) einen tellerförmigen Zug- und Druckanschlag (11) aufweist, dessen äußerer Rand bei Druckbelastungen gegen den äußeren Bereich der Zwischenplatten-Oberseite (3) schlägt.

## Claims

1. Hydraulically damped engine mounting having two liquid-filled chambers (1, 2), which are at least partially surrounded by rubber-elastic peripheral walls (5, 12), are separated from one another by an intermediate plate (3) inserted in a sealing manner at the outer periphery into the mounting housing (27) and are hydraulically connected to one another via an overflow channel (4) disposed in their peripheral region, the intermediate plate (3) comprising two cup-shaped sheet metal parts (20, 21) which each have a bottom surface, a cylindrical portion (22, 23) as well as an adjoining, outwardly vaulted edge (24, 25), characterized in that
- the bottom surfaces of the cup-shaped sheet metal parts (20, 21) lie with their underside against an interlying flat plate (26) of the same external diameter as the sheet metal parts (20, 21) so that there are formed on either side of the plate (26) annular sub-channels (30, 31) which are each delimited by the outwardly vaulted edge (24, 25) and the cylindrical portion (22, 23) of the respective sheet metal pad (20, 21), the edge region of the flat plate (26) and the seal at the cylindrical mounting housing (27),
- that the cup-shaped sheet metal parts (20, 21) in the cylindrical portion (22, 23) each have a radially inward directed opening (32, 33) and the flat plate (26) in the edge region outside of the bottom surfaces has an axial through opening (34), and
- that in both the top and the bottom sub-channel (30, 31) a peripheral region between radial and axial opening (32, 32; 34) is partitioned off.

2. Engine mounting according to claim 1, characterized in that the radially inward directed openings (32, 33) are disposed offset from one another over the periphery, that the axial through opening (34) in the peripheral region lies between the two radial openings, and that the shorter peripheral region between the respective radial opening (32, 33) and the axial through opening (34) is partitioned off by inserts (35, 36).

3. Engine mounting according to claim 1 or 2, characterized in that the intermediate plate (3) has a central opening (41, 42), into which a rubber-elastic isolating diaphragm (40) is clamped.

4. Engine mounting according to claim 3, characterized in that the flat plate (26) is of an annular construction and is embraced at its inner periphery by the outer edge of the diaphragm (40).

5. Engine mounting according to claim 3, characterized in that the central openings (41, 42) in the bottom region of the cup-shaped sheet metal parts (20, 21) are of a grid-like construction (43, 44) and are arched with axial clearance relative to the diaphragm (40).

6. Engine mounting according to one or more of claims 1 to 5, characterized in that a bearing plate (6, 8) which closes off the end of the top bearing chamber (1) is of a two-part construction in that a mounting plate (8) is vulcanized, with the insertion of a rubber layer (7), onto the top side of a bearing ring (6) which is vulcanized to the rubber-elastic chamber wall (5), said mounting plate having a central projection (9) which projects freely inwards into the bearing chamber (1) and has at its inner end (10) a plate-shaped tension-and-compression stop (11) whose outer edge, in the event of compressive loading, strikes against the outer region of the top side of the intermediate plate (3).

## Revendications

1. Support de moteur à amortissement hydraulique comportant deux chambres (1,2) emplies de liquide et entourées, au moins partiellement, de parois périphériques (5, 12) ayant l'élasticité du caoutchouc, qui sont séparées l'une de l'autre par un plateau (3) intermédiaire monté de manière étanche sur le pourtour extérieur dans le corps (27) du support et qui communiquent hydrauliquement entre elles par un canal (4) de passage disposé dans leurs parties périphériques, le plateau intermédiaire (3) étant constitué de deux pièces de tôle (20, 21) en forme de tasse, qui comportent chacune une surface de fond, une partie cylindrique (22, 23) ainsi qu'un bord (24, 25) incurvé vers l'extérieur, s'y raccordant, caractérisé
- en ce que les surfaces de fond des pièces de tôle (20, 21) en forme de tasse s'appliquent par leur face inférieure sur un plateau (26) plan interposé entre elles, de même diamètre extérieur que les pièces de tôle (20, 21), de manière à former de part et d'autre du plateau (26) des canaux (30, 31) partiels annulaires, qui sont délimités chacun par le bord (24, 25) incurvé vers l'extérieur et par la partie cylindrique (22, 23) de la pièce de tôle (20, 21), par la partie marginale du plateau (26) plan et par la garniture d'étanchéité sur le corps (27) cylindrique du support,
- en ce que les pièces de tôle (20, 21) en forme de tasse comportent, dans la partie cylindrique (22, 23), chacune un orifice (32, 33) dirigé radialement vers l'intérieur et le plateau (26) plan comporte, dans la partie marginale à l'extérieur des surfaces du fond, un orifice (34) axial de passage et
- en ce qu'une partie périphérique de chacun des canaux (30, 31) partiels supérieur et inférieur est bouchée entre les orifices radiaux (32, 33; 34).

2. Support de moteur suivant la revendication 1, caractérisé en ce que les orifices (32, 33) dirigés radialement vers l'intérieur sont décalés l'un par rapport à l'autre sur la circonférence, en ce que l'orifice (34) axial de passage se trouve dans la partie périphérique entre les deux orifices radiaux et en ce que la partie périphérique la plus courte comprise entre chacun des orifices (32, 33) radiaux et l'orifice (34) axial de passage est bouchée par des garnitures (35, 36).

3. Support de moteur suivant la revendication 1 ou 2, caractérisé en ce que le plateau (3) intermédiaire comporte un orifice (41, 42) central dans lequel est bloquée une membrane (40) de découplage ayant l'élasticité du caoutchouc.

4. Support de moteur suivant la revendication 3, caractérisé en ce que le plateau (26) plan est en forme d'anneau de cercle et son pourtour intérieur est entouré par le bord extérieur de la membrane (40).

5. Support de moteur suivant la revendication 3, caractérisé en ce que les orifices (41, 42) centraux dans la partie du fond des pièces de tôle (20, 21) en forme de tasse sont constitués sous forme de grille (43, 44) et sont incurvés en ayant une certaine distance axiale par rapport à la membrane (40).

6. Support de moteur suivant l'une ou plusieurs des revendications 1 à 5, caractérisé en ce qu'un plateau support (6, 8) fermant, du côté frontal, la chambre supérieure (1) du support, est constituée en deux parties, de sorte que sur la face supérieure d'un anneau support (6) vulcanisé sur la paroi (5) de la chambre ayant l'élasticité du caoutchouc, soit appliqué par vulcanisation, avec interposition d'une couche (7) de caoutchouc, un plateau (8) de fixation, qui comporte un prolongement (9) central, faisant saillie librement à l'intérieur de la chambre (1) du support et comportant, sur son côté frontal (10) intérieur, une butée (11) de traction et de compression en forme d'assiette, dont le bord extérieur vient, lors d'une contrainte de compression, sur la partie extérieure de la face supérieure (3) du plateau intermédiaire.
